# DEMANDE DE BREVET EUROPEEN

(11) **EP 0 680 989 A1**
(43) Date de publication de la demande: **08.11.1995**
(21) Numéro de dépôt: 95400990.8
(22) Date de dépôt: 02.05.1995
(51) Int. Cl.: C08G 73/02, H01F 1/00

(54) **Composés cristallins ferromagnétiques de copolymères de dérivés de la naphtylamine et de composés aminoaromatiques**

(30) Priorité: 06.05.1994 FR 9405610
(71) Demandeur: ALCATEL ALSTHOM COMPAGNIE GENERALE D'ELECTRICITE, F-75382 Paris Cédex 08 (FR)
(72) Inventeur: Le Mehaute, Alain, F-91190 Gif Sur Yvette (FR); Galaj, Stanislas, F-94110 Arcueil (FR); Cottevieille, Denis, F-93100 Montreuil (FR); Tsobnang, Françoi, c/o Alcatel Alsthom Recherche, F-91460 Marcoussis (FR); Lefort, François, F-22100 Lanvallay (FR)
(74) Mandataire: Pothet, Jean Rémy Emile Ludovic

(57) **Abrégé**

Composés cristallins à propriétés ferromagnétiques d'inclusion de sels métalliques dans des copolymères dont le motif élémentaire comprend accolés un maillon d'un premier groupe de composés aminoaromatiques dérivés de la 1-naphtylamine et des formes oxydées correspondantes, et un maillon d'un second groupe de composés aminoaromatiques substitués choisis parmi les composés aminés substitués comprenant au moins deux noyaux benzèniques condensés, les composés polycycliques substitués comprenant au moins un motif aniline dans leur structure, les composés dérivés de l'aniline portant un substituant relié au noyau par un maillon éthynylidène ou para-phénylène, et les composés oxydés correspondants.

Procédé de préparation de ces composés.

## Description

La présente invention concerne des composés cristallins à propriétés ferromagnétiques d'inclusion de sels métalliques dans des copolymères dont le motif élémentaire comprend accolés un maillon d'un premier groupe de composés aminoaromatiques dérivés de la 1-naphtylamine et des formes oxydées correspondantes, et un maillon d'un second groupe de composés aminoaromatiques substitués choisis parmi les composés aminés substitués comprenant au moins deux noyaux benzèniques condensés, les composés polycycliques substitués comprenant au moins un motif aniline dans leur structure, les composés dérivés de l'aniline portant un substituant relié au noyau par un maillon éthynylène ou para-phénylène, et les composés oxydés correspondants. Ces copolymères ont fait l'objet de la demande de brevet français n° 9311504 du 28 septembre 1993 au nom d'Alcatel-Alsthom Compagnie Générale d'Electricité. Ils présentent des propriétés magnétiques, et pour certains ferromagnétiques.

Il serait souhaitable de disposer d'autres composés à base de polymères présentant également des propriétés ferromagnétiques.

La présente invention porte donc sur les composés cristallins à propriétés ferromagnétiques formés par inclusion de sels métalliques dans les copolymères ci-dessus. Elle concerne des composés cristallins à propriétés ferromagnétiques d'origine organique mais résultant de l'inclusion de sels métalliques dans des copolymères dont le motif élémentaire comprend accolés un maillon d'un premier groupe de composés aminoaromatiques dérivés de la 1-naphtylamine et des formes oxydées correspondantes, et un maillon d'un second groupe de composés aminoaromatiques substitués choisis parmi les composés aminés substitués comprenant au moins deux noyaux benzèniques condensés, les composés polycycliques substitués comprenant au moins un motif aniline dans leur structure, les composés dérivés de l'aniline portant un substituant relié au noyau par un maillon éthynylène ou para-phénylène, et les composés oxydés correspondants. La structure cristalline de ces composés correspond à une réticulation ordonnée du copolymère, le sel métallique restant incorporé à une structure tridimensionnelle.

La structure de la forme réduite des composés du premier groupe et de ceux du second groupe à noyau naphtalènique comprend un radical 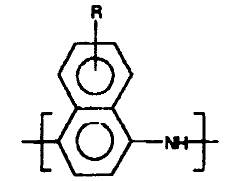
et celle de leur forme oxydée un radical

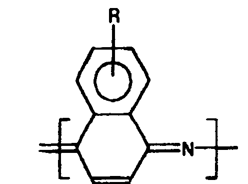

La structure de la forme réduite des composés du second groupe sans noyau naphtalènigue comprend un radical 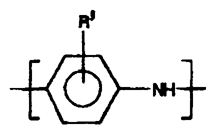
et celle de leur forme oxydée un radical

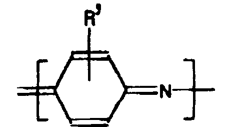

De nombreux sels métalliques conviennent pour l'obtention de ces composés d'inclusion, en particulier les sels des métaux alcalins ou alcalino-terreux, des métaux des groupes du fer et du platine, des métaux des terres rares, des métaux des classes 1B et 2B, 5A et 6A de la classification périodique. Les chlorures, bromures, iodures et sulfates du cuivre, du fer, du zinc, du magnésium, d'argent, du manganèse, du cobalt, du chrome et du nickel sont particulièrement intéressants par leur ferromagnétisme.

Le procédé de fabrication de ces composés d'inclusion est caractérisé en ce que l'on solubilise l'un des copolymères ci-dessus, puis on le complexe et on le précipite par addition d'une solution de sel métallique. Il est avantageux d'effectuer la précipitation en présence d'un champ magnétique.

Si l'on prend comme copolymère de départ celui obtenu à partir d'aniline et d'acide de Clève bêta (acide 5-amino-2-naphtalènesulfonique) par réaction des monomères en présence d'un oxydant en solution dans un acide faible, on redisperse de préférence le copolymère dans l'acétone, puis on le décante, on met la phase liquide en présence d'éther, avec précipitation d'un produit bleu, que l'on sépare et purifie, puis on remet en solution, et on additionne d'une solution de sel métallique. Le produit bleu obtenu au cours de cette préparation, dont la structure n'est pas encore bien déterminée, présente déjà un caractère ferromagnétique, qui est exalté par l'inclusion d'un sel métallique.

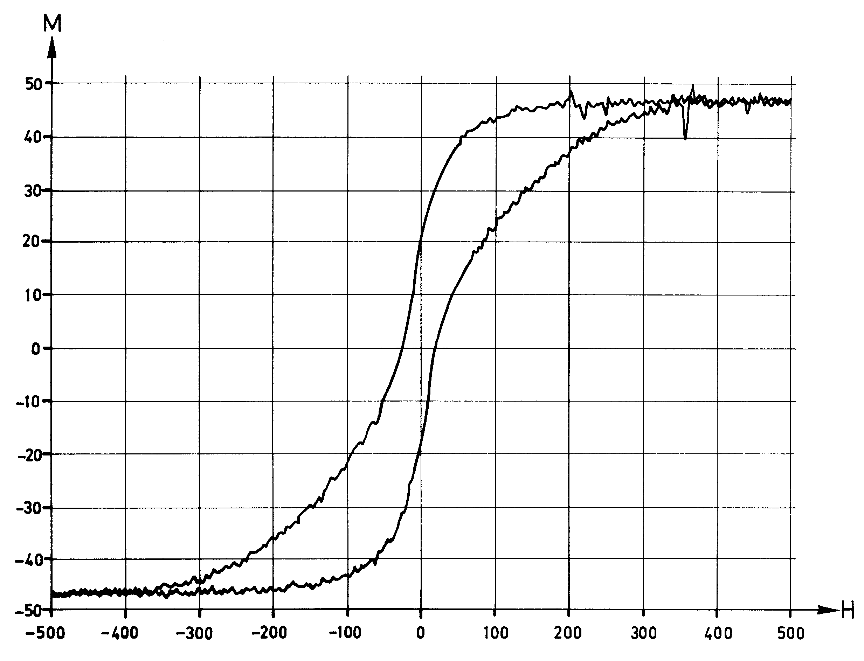

Il est décrit ci-après, à titre d'exemple et en référence à la figure unique du dessin annexé, la préparation de composés d'inclusion selon l'invention et les propriétés ferromagnétiques de tels composés.

### EXEMPLE 1

### a) Préparation d'un copolymère 1-1 d'aniline et d'acide de Clève bêta (acide 5-amino-2-naphtalènesulfonique)

Dans 25 cm³ d'aniline maintenue sous agitation, on dissout 5g d'acide de Clève brut. Après 15 minutes on ajoute 20 cm³ d'acide acétique et laisse en contact 5 minutes.
On introduit alors en continu une solution contenant 5 cm3 d'acide acétique anhydre et 4 cm3 d'eau oxygénée à 50 volumes. Lorsque la totalité de la solution oxydante a été introduite, on centrifuge et maintient sous agitation pendant 48 heures.

### b) Traitement du culot de centrifugation

On le redisperse dans l'acétone, puis on centrifuge la dispersion jusqu'à ce que le liquide surnageant soit presque complètement translucide. On obtient ainsi environ 2 mg de produit qui manifeste un caractère ferromagnétique.

### c) Traitement du liquide surnageant

On verse ce liquide dans un bécher contenant de l'éther en agitant. Il précipite un produit bleu.
Le produit bleu dont la composition n'a encore pu être déterminée, est ensuite séparé par centrifugation et lavé à l'acétone jusqu'à élimination aussi complète que possible des dérivés azoïques. Il est ensuite lavé à l'éther et séché sous argon à température ambiante. La masse de produit récupéré correspond à 36% de l'acide de Clève brut utilisé.
Ce produit bleu est très soluble dans le méthanol, soluble dans l'ammoniac, l'eau, l'acide chlorhydrique et l'acide acétique, insoluble dans le toluène. Son aimantation à saturation est de 4.10⁻³ emu/g.

### d) Formation des complexes d'inclusion à partir du produit bleu

On redissout ce produit bleu dans un de ses solvants. Puis on forme un précipité par addition d'une solution d'un sel métallique et sépare le produit obtenu, dont on mesure l'aimantation à saturation.
Sans que cela vienne limiter la portée de l'invention, on peut présumer que le sel métallique provoque une réticulation ordonnée tridimensionnelle, en se logeant à l'intérieur du réseau formé.
On obtient ainsi par additions respectives de solutions aqueuses de bromure cuivrique, de sulfate ferreux et de chlorure de zinc des composés présentant des aimantations à saturation respectives de 10⁻¹, 4,5.10⁻² et 4,2.10⁻² emu/g, avec des rendements après précipitation et lavage de quelques %.

La figure du dessin représente le cycle d'hystérésis d'un échantillon obtenu à partir d'un composé d'inclusion dans un copolymère 1-1 d'aniline et d'acide de Clève bêta et d'un sel cuivrique. Le champ H (en oersteds) est représenté en abscisse, l'aimantation M (en unités électromagnétiques) en ordonnées. L'aimantation à saturation du composé d'inclusion est d'environ 0,1 emu/g, son aimantation rémanente de 0,08 emu/g et son champ coercitif de 487 oersteds.

### EXEMPLE 2

On suit le même mode opératoire que dans l'exemple 1, jusqu'à la formation d'un précipité par addition d'une solution d'un sel métallique et la séparation du produit obtenu.

Le produit strictement diamagnétique obtenu est dissous dans un mélange d'eau et d'acétone, auquel on ajoute une quantité stoechiométrique, rapportée au radical sulfonique du copolymère, de nitrate d'argent. Il se forme alors un film d'argent très mince provenant de la réduction partielle des ions Ag⁺. La solution est filtrée, puis laissée reposer 3 jours en évaporation lente à la température ambiante. On obtient des cristaux. On prélève certains d'entre eux et mesure leur aimantation à saturation, qui est égale à 0,1 emu/g.

## Revendications

**1/** Composés cristallins à propriétés ferromagnétiques d'inclusion de sels métalliques dans des copolymères dont le motif élémentaire comprend accolés un maillon d'un premier groupe de composés aminoaromatiques dérivés de la 1-naphtylamine et des formes oxydées correspondantes, et un maillon d'un second groupe de composés aminoaromatiques substitués choisis parmi les composés aminés substitués comprenant au moins deux noyaux benzèniques condensés, les composés polycycliques substitués comprenant au moins un motif aniline dans leur structure, les composés dérivés de l'aniline portant un substituant relié au noyau par un maillon éthynylidène ou para-phénylène, et les composés oxydés correspondants.

**2/** Composés cristallins d'inclusion selon la revendication 1, caractérisés en ce que les sels métalliques sont des sels d'éléments de transition ou de métaux alcalino-terreux.

**3/** Composés cristallins d'inclusion selon la revendication 2, caractérisés en ce que les sels métalliques sont des sels de cuivre, de fer, de zinc, de magnésium, d'argent, de manganèse, de cobalt, de chrome ou de nickel.

**4/** Procédé de fabrication des composés d'inclusion selon l'une des revendications 1 à 3, caractérisé en ce qu'on solubilise un copolymère, puis on le complexe et on le précipite par addition d'une solution d'un sel métallique.

**5/** Procédé selon la revendication 4, caractérisé en ce qu'on effectue la précipitation dans un champ magnétique.

**6/** Procédé selon les revendications 4 ou 5, dans lequel le copolymère de départ est un copolymère d'aniline et d'acide de Clève bêta ou thêta obtenu par réaction des monomères en présence d'un oxydant en solution dans un acide faible, caractérisé en ce qu'il est redispersé dans l'acétone, puis décanté, en ce que la phase liquide est mise en présence d'éther avec précipitation d'un produit souvent bleu, que l'on sépare et purifie, puis remet en solution et additionne de la solution de sel métallique.

**7/** Le composé "bleu" ferromagnétique résultant de la précipitation après traitement de la phase liquide par l'éther dans le procédé selon la revendication 6.

**8/** Le composé vert ferromagnétique résultant de la précipitation après traitement de la phase liquide par l'éther dans le procédé selon la revendication 6.

**9/** Procédé de fabrication de composés cristallins d'inclusion selon la revendication 1, caractérisé par le fait que l'on laisse le produit en solution puis le soumet ultérieurement à une cristallisation.
